Europäisches Patentamt

European Patent Office

Office européen des brevets

(11) Publication number: **0 310 867**
**A2**

## EUROPEAN PATENT APPLICATION

(21) Application number: **88115504.8**

(22) Date of filing: **21.09.88**

(51) Int. Cl.⁴: **G01N 30/60 , B01D 15/08**

(30) Priority: **05.10.87 JP 251323/87**

(43) Date of publication of application:
**12.04.89 Bulletin 89/15**

(84) Designated Contracting States:
**DE FR GB**

(71) Applicant: **SHIMADZU TECHNO-RESEARCH INC.**
**9, Nishinokyo Shimoaicho**
**Nakagyo-ku Kyoto(JP)**

(72) Inventor: **Haruki,Tatsuro**
**1-31, Megamiyama-cho Koyoen**
**Nishinomiya Hyogo(JP)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Chromatographic column.**

(57) A chromatographic column provided with a spacer in contact with the upstream end surface of an inlet filter holding the upstream end of the stationary phase filling the column pipe, and/or the downstream end surface of an outlet filter holding the downstream end of the stationary phase, the spacer providing a flow path having a flow resistance value sufficiently smaller than that of the filters, so that the flow path of the spacer can disperse a mobile phase supplied to the column substantially instantly all over the inlet filter surface, or collect the mobile phase substantially instantly from all over the outlet filter surface into a mobile phase discharging tube, thereby to prevent the sample flowing through the filters from being unduly broadened in the direction of flow, and to obtain a chromatogram with sharper and more symmetrical peaks than otherwise.

Fig. 1

EP 0 310 867 A2

# CHROMATOGRAPHIC COLUMN

## BACKGROUND OF THE INVENTION

This invention relates to a column for use in analytical instruments such as chromatographs, in which the inflow condition of a sample into the column and the outflow condition of separated sample components therefrom are greatly improved.

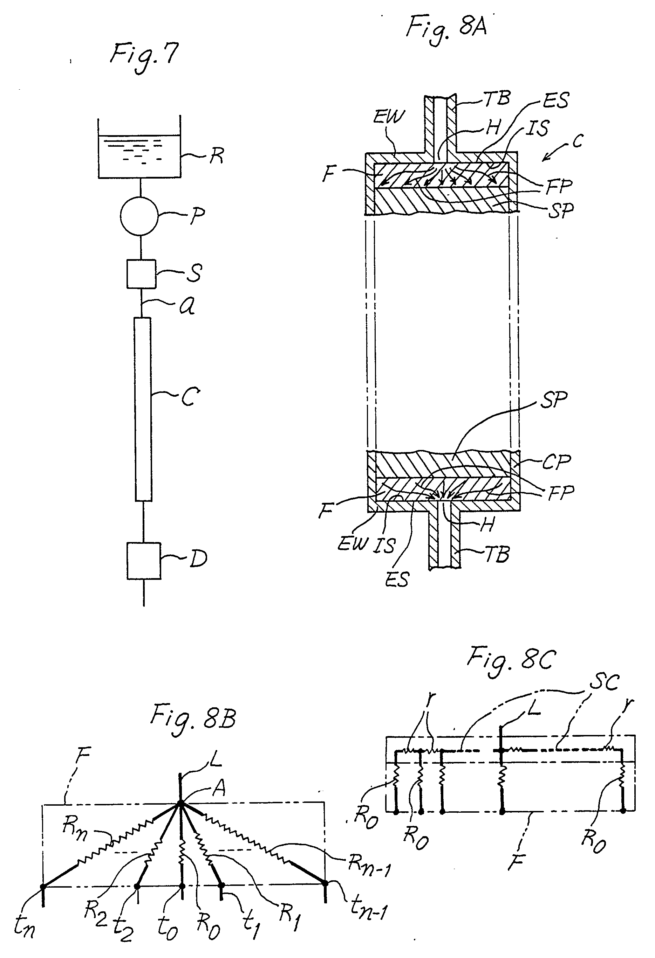

As schematically shown in Fig. 7, a typical liquid chromatograph comprises a reservoir R for containing a liquid constituting a mobile phase, a pump P, a sample injecting portion S, a column C, a detector D and a flow path a connecting the above-mentioned component parts in series in the order mentioned. As shown in Fig. 8A, the column C is composed mainly of a pipe CP for containing a stationary phase SP, an inlet and an outlet filter F provided in the inlet and outlet ends, respectively, of the column pipe CP so as to hold the stationary phase therein, an inlet and an outlet tube TB connected to the inlet and outlet ends of the column pipe CP, respectively, for introducing a mobile phase into the column and discharging the mobile phase out of the column. The column is so constructed that the inlet and outlet filters F contact the inner surfaces IS of the axial end walls EW of the column pipe CP in which the inlet and outlet ends of the inlet and outlet tubes TB open as at H.

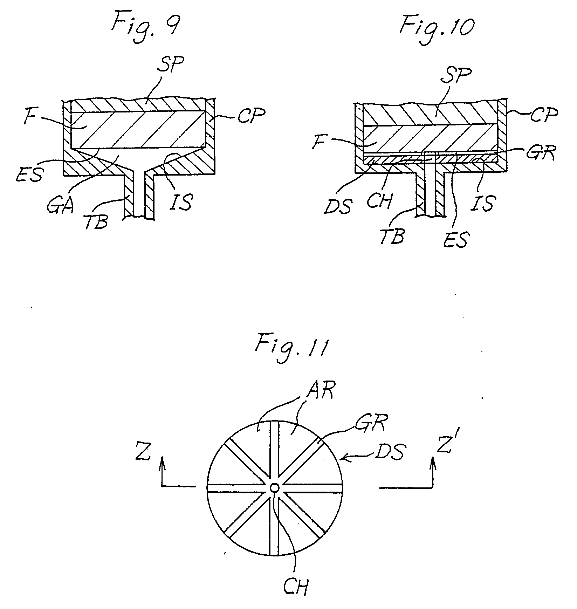

Two other conventional arrangements of the column end are shown in Figs. 9 and 10, wherein the same reference symbols as in Fig. 8A denote corresponding parts. Although in these figures only the lower or outlet end of the column is shown, the upper or inlet end thereof has a similar structure.

In the arrangement of Fig. 9, a space or gap GA is provided between the downstream or outlet end surface ES of the filter F and the above-mentioned inner wall surface IS of the column pipe CP so that a substantially uniform pressure prevails over the end surface ES of the filter.

In the arrangement of Fig. 10, a circular disk or distributor DS having a central hole CH and a limited number of grooves GR radially extending from the central hole on one surface of the disk as shown in Fig. 11 is so arranged as to face the filter F, with the above-mentioned surface of the distributor DS having the radial grooves GR thereon being in contact with the downstream end surface ES of the filter F. Fig. 10 shows a sectional view of the distributor DS taken along line $Z - Z'$ in Fig. 11.

In the structure of Fig. 8A, however, there are formed in each filter F between the end surface thereof in contact with the stationary phase SP and the opposite end surface ES of the filter, an infinite number of flow paths FP shown as arrow-headed curves with varying pressure gradients, through which fluid moves, so that in the inlet end of the column those fluid molecules coinciding at the inlet H of the column pipe CP pass through the paths of various lengths and flow resistance values in the filter and cannot simultaneously reach the opposite end surface of the filter which is in contact with the stationary phase, with resulting axial band spreading of those molecules at the start of separation in the column.

The phenomenon is schematically described in further detail at one of both ends, say, the inlet end of the column with reference to Fig. 8B, making use of analogy with an electric circuit, in which the inlet tube TB in Fig. 8A is shown as a single input line L and the flow paths in a sectional plane of the filter cut by a plane including the axis of the filter are shown as resistors $R_0$, $R_1$, $R_2$, $\cdots$ $R_n$ of different resistance values connected at a terminal A to the input line L. The outlet ends of the flow paths on the downstream end surface of the inlet filter F in contact with the stationary phase SP are expressed by the output terminals $t_0$, $t_1$, $t_2$, $\cdots$ $t_n$ of the resistors $R_0$, $R_1$, $R_2$, $\cdots$ $R_n$.

The liquid flowing through the filter along its axis follows the shortest path $R_0$ of the smallest resistance value. As the flow path the liquid takes is positioned radially outwardly toward the periphery of the filter, the liquid will encounter successively larger resistance values of the resistors $R_1$, $R_2$, ... $R_n$ since the flow path becomes successively longer toward the periphery of the filter provided that the filter is substantially uniform in material and porosity. Since the pressure at the end surface of the filter in contact with the stationary phase is nearly the same all over the surface of the filter because the specific resistance value of the stationary phase is far smaller than that of the filter due to the difference in porosity, the pressure drop is substantially the same between the terminal A and each of the terminals $t_0 \sim t_n$ in Fig. 8B.

Suppose that the greatest resistance value of the resistor $R_n$ is one hundred times the smallest value of the resistor $R_0$. If it takes a period of time $T_0$ for liquid to pass through the shortest path of the resistor $R_0$, it will take a period of time $T_n$ one hundred times as long as the time $T_0$ (that is, $T_n = 100 \times T_0$) for liquid to pass through the flow path of the resistor $R_n$. Thus, with conventional filters having flow paths of various lengths and different flow resistance values, the liquid molecules of a sample at the same point on the upstream end surface of the inlet filter will be spread in the longitudinal direction of the column after they have passed through the inlet filter.

The same is true with the discharge or outlet end of the column, where those liquid-molecules coinciding on the upstream end surface of the outlet filter F which is in contact with the stationary phase SP cannot simultaneously reach the opening H of the discharge tube TB at the downstream side of the filter. As a result, a band of a separated sample component in the column spreads in the direction of flow as it approaches a detector provided in the flow path downstream of the column, so that the peak width in the resulting chromatogram widens and a tailing occurs, which may cause adjacent peaks to overlap each other, with resulting reduction in the accuracy of measurement.

The arrangements shown in Figs. 9 and 10 are widely known in the art. In the arrangement of Fig. 9, however, the filter must be supported against the high operating pressure impressed thereupon while analysis is being conducted, the pressure being of the order of several hundred times the atmospheric pressure in a typical high-speed liquid chromatograph. Such a high pressure impressed on the filter might squeeze and deform the filter, with resulting deterioration of the function of the filter. The filter must be thick enough to be sufficiently pressure-resistive in such a case.

Filters of this type are usually made of sintered metal with pores formed therein, which are locally irregular and nonuniform due to the process of manufacturing the filters and often part ially clogged when they are melted in the manufacturing process. This is another factor disadvantageously causing detected peaks to be broadened, and a thicker filter of such sintered metal would possibly more disadvantageously increase broadening of the peaks.

In the arrangement of Fig. 10, in the periphery of the circular distributor DS there exists between adjacent grooves GR an area AR where there is no groove since a limited number of grooves are provided on the distributor, so that the previously mentioned problem remains unsolved yet on the end surface of the filter which faces those intermediate areas AR of the distributor between the grooves GR.

## SUMMARY OF THE INVENTION

Accordingly, the primary object of the invention is to provide a chromatographic column which is capable of distributing a fluid all over the whole area of the inlet end surface of the stationary phase in the column as uniformly as possible thereby to cause the fluid to flow into the stationary phase all over the inlet end surface thereof as simultaneously as possible, and/or collecting the fluid flowing out of the whole area of the outlet end surface of the stationary phase as simultaneously as possible.

The chromatographic column of the invention comprises a pipe provided at one end thereof with an inlet portion for introducing a mobile phase into the column and at the opposite end thereof with an outlet portion for discharging the mobile phase out of the column, a stationary phase filling a substantial length of the pipe, an inlet filter provided in the pipe at the upstream side of the stationary phase so that the downstream end surface of the inlet filter contacts the upstream end surface of the stationary phase, and/or an outlet filter provided in the pipe at the opposite downstream side of the stationary phase so that the upstream end surface of the outlet filter contacts the downstream end surface of the stationary phase.

The chromatographic column of the invention is characterized by that on or close to that end surface of either one or both of the inlet and outlet filters which is not in contact with the end surfaces of the stationary phase, there is provided means for supporting the filter at substantailly the whole area of the end surface thereof without substantially closing the pores of the filter on the end surface thereof, and for providing a flow path which is capable of dispersing fluid substantially all over that end surface of the inlet filter which is not in contact with the stationary phase, or collecting the fluid effluent from substantially all over that end surface of the outlet filter which is not in contact with the stationary phase, the flow path having a flow resistance value so small as compared with that of the filter and a volume so small that the influence of dispersion or collection on the chromatogram obtained as a result of analysis is negligible.

The object of the chromatographic column of the invention is to disperse the fluid that is introduced into the column at one point at the inlet end of the column as simultaneously as possible in the radial direction at the inlet end of the column, and/or cause the fluid dispersed all over the transverse section of the outlet end of the column to converge after the fluid has flown through the filter and flow into an outlet path thereof as simultaneously as possible, and to prevent both deformation of the filter due to inflow or outflow of a highly pressurized fluid into or out of the filter and interference with the uniform inflow or outflow of the fluid into or out of the column, thereby to obtain a chromatogram of a sample being analyzed wherein peaks caused by separated sample components appear in sharp form.

3

The chromatographic column of the invention is suitable for use in not only liquid chromatographs, especially, high-speed liquid chromatographs but also gas chromatographs.

The flow path provided on or close to the opposite end surface of the filter to the end surface thereof in contact with the end surface of the stationary phase preferably is netlike, though not limited to this structure. The flow paths may be provided on or included in the end surface of the filter. The flow path may be provided on or included in the inner surface of the end wall of a column pipe to which a mobile phase introducing inlet path or a mobile phase discharging outlet path is connected. The flow path may be provided on or included in the inner surface of a connector for connecting the column pipe and the mobile phase introducing or discharging path. The flow path may be provided in the form of a thin spacer of netlike structure inserted between the filter and the inner end wall of a column pipe or attached to the filter or the inner end wall of the column pipe. The flow path may be formed by etching, sculpturing, forging, or otherwise, and the spacer may be made of metal, ceramic, plastics, or any other suitable material.

The spacer may be made of metallic fibers woven into a meshed fabric provided that it provides many fine flow paths. The spacer may also be a thin plate having many fine pores formed therein or narrow grooves formed on one surface thereof. In view of possibility of the flow paths being clogged, the spacer is preferably a net made of metallic fibers. The netlike structure of the spacer may be provided by weaving metallic fibers into a meshed fabric of plain weave, in which the fibers run in two directions perpendicular to each other. The spacer may also be of a multilayer structure comprising a plurality of webs of meshed fabric of plain weave. The netlike pattern of the narrow grooves on the spacer plate may also be provided by as many grooves as possible extending radially, or radially extending grooves combined with concentrically arranged grooves like a spider net. The pattern of the grooves on the spacer may also be grid-like.

In short, the spacer may be of any suitable netlike structure provided that it can support the filter under high pressure over substantially the whole end surface thereof without substantially closing the minute pores therein, with the netlike structure enabling rapid dispersion of fluid all over the surface of the filter or rapid collection of fluid from all over the filter surface. It is preferable that the spacer is made as thin as possible, while having a sufficient strength against a high pressure to which it is subjected in a chromatographic column while in use. The pores or meshes of the spacer preferably are made as small as possible provided that they do not prevent a mobile phase and a substance to be analyzed contained therein from passing through them. If metallic fibers are woven in plain weave into a meshed fabric to form a spacer having a sufficient thickness, fibers having a diameter about half the thickness of the spacer to be formed are to be used. To take an example, if the metallic fibers have a diameter of about 60 $\mu$m, the spacer which has a mesh size of about 150 is applicable.

Usually, the diameter of the spacer itself is about the same as that of the inlet and outlet filters for supporting the stationary phase in the column pipe. If the spacer is to be provided in a space in a connecting member which connects a mobile phase introducing path or a mobile phase discharging path to a chromatographic column for analysis use, the spacer is circular and has a diameter of about 2 mm to 20 mm. If the spacer is to be provided in a space in a connecting member similar to the above-mentioned one in a chromatographic column for preparatory use, the spacer is made circular and has a diameter of about 20 mm to 1000 mm.

There are a variety of metals which can be used as a material of the spacer. These metals must be both strong enough against high pressure and inactive to the mobile phase and the substances to be analyzed which are contained in the mobile phase. Stainless steel and titanium are amoung such metals.

The other component parts of the column of the invention, such as, the column pipe for containing a stationary phase, the inlet and outlet filters for supporting the stationary phase, the connector for connecting a path for supplying a mobile phase to the column to the inlet of the column pipe, and the connector for connecting a path for discharging the mobile phase with separated sample components out of the column to the outlet of the column pipe, etc. may be of conventional types commonly used in the art.

The inlet and outlet filters are so designed as to hold a stationary phase in place within the column pipe, and provided with an infinite number of minute pores having a smaller diameter than the average diameter of the grains constituting the stationary phase. For example, if the average grain diameter of the stationary phase is 5 $\mu$m, the pore diameter of the filters may be of the order of 2 $\mu$m to 3 $\mu$m. The filters can be a porous body of sintered metal or ceramic material. It is practically difficult, however, to produce a sintered porous body formed with minute pores of substantially uniform diameter.

It has been found that a filter of a netlike structure can advantageously be used in the column of this invention. The filter can be made of one or more netlike sheets piled one upon another and pressed together into a single plate. Each netlike sheet is made of metallic fibers having a diameter smaller than those fibers of which the previously mentioned netlike spacer is made, or a metallic plate having many minute flow paths formed therein. The mesh size of the sheet is about 200, so that the filter obtained has

4

minute pores of a diameter of the order of 2 μm. The metal can be stainless steel, titanimum, etc.

In the conventional filter of sintered metal the pores are not uniform and many of them have clogged portions due to the method of manufacturing the filter, so that fluid cannot uniformly pass through the filter. The netlike metallic filter has many pores of uniform shape uniformly distributed in the filter, so that there is no problem with respect to distribution of fluid in the filter.

The flow path provided by the spacer of the invention helps eliminate the above defect. The spacer provides a gap or space between the inlet and/or the outlet filter and the corresponding one of the axial end walls of a chromatographic column to which a mobile phase supplying path and/or a mobile phase discharing path are connected and the flow path occupying the gap or space functions to keep the whole area of that surface of the filter which faces the mobile phase supplying or discharging path at a substantially uniform pressure level and helps distribute fluid uniformly all over the surface of the filter and/or converge fluid from all over the filter surface.

The fluid supplied through the mobile phase supplying path under high pressure and containing substances to be separated is led to the upstream end surface of the inlet filter after having passed through the space between the inner upstream end wall of the column and the upstream end surface of the inlet filter. Since the volume of that space is very small and its flow resistance is negligible, the fluid is instantaneously distributed substantially uniformly over the whole area of the upstream end surface of the inlet filter. The fluid thus supplied to the whole area of the upstream end surface of the inlet filter passes through an infinite number of parallel routes extending axially in the filter and approximately simultaneously reaches the whole area of the upstream end surface of the stationary phase provided downstream of the inlet filter. After having been transmitted through the stationary phase under high pressure, the fluid reaches the outlet filter provided at the downstream side of the stationary phase. The fluid molecules existing on the upstream end surface of the outlet filter pass through an infinite number of parallel routes extending axially in the outlet filter and are introduced into the space between the inner downstream end wall of the column and the downstream end surface of the outlet filter provided at the downstream side of the stationary phase, and due to the very small volume and negligible flow resistance value of that space, the fluid emerging out of the outlet filter substantially simultaneously converges into a mobile phase discharging path connected to the downstream end of the column.

The function of the space provided in accordance with the invention in the inlet and/or outlet end of a charomatographic column will be described in further detail by making use of analogy with an electric circuit and with reference to Fig. 8C, in which the space in the inlet end of the column is shown as an example. As in Fig. 8B, the mobile phase supplying path TB is schematically shown as a mere line L. The axially extending parallel flow paths in the sectional plane of the inlet filter F cut by a plane including the axis of the fitler are shown as a number of parallel resistors $R_0$ of the same resistance value, and the flow path provided by the space SC of the invention is shown as series resistors $r$ connected between the line L and the parallel resistors $R_0$. Since the resistance value of the resistors $r$ is negligibly small as compared with the resistance value of the resistors $R_0$, and the pressure drop across each of the resistors $R_0$ or parallel flow routes in the inlet filter is substantially the same, a mobile phase supplied through the line L can instantaneously spread all over the upstream end surface of the inlet filter and substantially simultaneously pass through the parallel routes in the filter, thereby to prevent sample bands in the mobile phase supplied to the column from being spread through the filter.

The function of the space in the outlet end of the column is similar to that of the inlet space so that no explanation will be required.

## BRIEF DESCRIPTION OF THE DRAWINGS

Fig. 1 is an enlarged longitudinal section of an end portion of a chromatographic column constructed in accordance with the invention;

Fig. 2A is a somewhat schematic top plan view of a netlike spacer used in the column of the invention;

Fig. 2B is an enlarged view of part of the spacer shown in Fig. 2A;

Fig. 2C is a sectional view taken along line X-X in Fig. 2B;

Fig. 2D, 2E and 2F are somewhat schematic top plan views of different spacers used in the column of the invention;

Fig. 2G is a schematic sectional veiw of the filter combined with a spacer;

Fig. 3 is a chromatogram obtained with the column shown in Fig. 1;

5

Fig. 4 is a chromatogram obtained with a column wherein no spacer is used but a filter of a netlike structure is used;

Fig. 5 is a chromatogram obtained with a conventional column;

Fig. 6 is a chromatogram obtained with a column wherein a combination of a spacer of the invention and a filter of sintered metal is used;

Fig. 7 is a schematic layout of a typical liquid chromatograph;

Fig. 8A is a schematic longitudinal section of a conventional chromatographic column;

Fig. 8B is an electric circuit diagram for explanation of the operation of the inlet filter used in the column shown in Fig. 8A;

Fig. 8C is an electric circuit diagram for explanation of the operation of the spacer used in the column of the invention;

Figs. 9 and 10 are schematic longitudinal sections of the end portions of conventional chromatographic columns; and

Fig. 11 is a top plan view of the distributor used in the column of Fig. 10.

## DESCRIPTION OF PREFERRED EMBODIMENTS

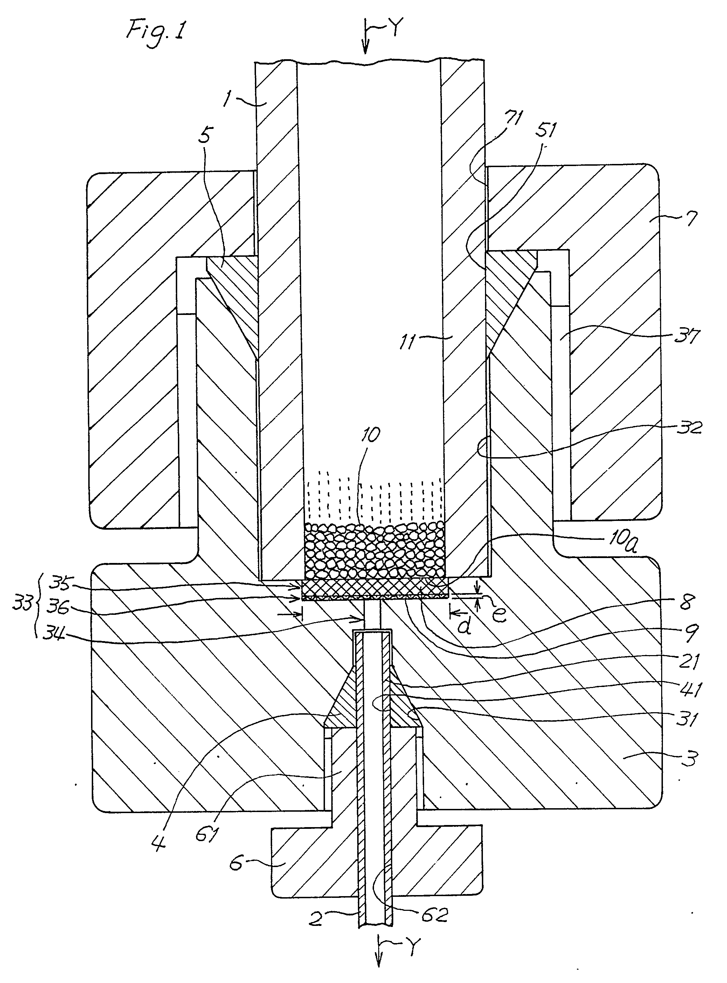

Referring to Fig. 1, there is shown a chromatographic column comprising a column pipe 1 and a stationary phase 10 packed therein, a thin tube 2 for discharging a mobile phase from the column, a connector 3 for connecting the tube 2 to the downstream end of the column pipe 1, a ferrule 4 for holding the discharge tube 2, a ferrule 5 for holding the column pipe 1, a set screw 6 for fixing the discharge tube 2 to the connector 3, a nut 7 for fixing the column pipe 1 to the connector 3, an outlet filter 8 provided in contact with the downstream end surface 10a of the stationary phase 10, and a spacer 9 of a netlike structure provided in contact with the downstream end surface of the filter 8 in accordance with the invention. In the specification, the terms "upstream" and "downstream" are used on the assumption that fluid flows in the direction of an arrow Y in Fig. 1.

The column pipe 1 is made of stainless steel and has an inside diameter of 4.0 mm and an outside diameter of 6.4 mm. The discharge tube 2 is also made of stainless steel and has an inside diameter of 0.3 mm and an outside diameter of 1.6 mm.

The set screw 6 is in the form of a bolt with an axial through bore 62 through which the discharge tube 2 passes. The fixing nut 7 is a cap nut formed in the bottom wall thereof with a central opening 71 through which the column pipe 1 extends. The ferrule 4 for holding the mobile phase discharging tube 2 is in the form of a truncated cone with a central through bore 41 through which the tube 2 extends. The ferrule 5 for holding the column pipe 1 is also in the form of a truncated cone with a central through bore 51 through which the column pipe 1 extends.

The connector 3 for connecting the mobile phase discharging tube 2 to the column pipe 1 is in the form of a bolt comprising a head portion and a stem portion. The head portion of the bolt 3 is formed with a central recess 31 of a smaller diameter for receiving one end of the mobile phase discharging tube 2, and the stem portion of the bolt 3 is formed with a central recess 32 of a larger diameter for receiving the downstream end of the column pipe 1, the two recesses 31 and 32 communicating with each other as will be described.

The recess 31 in the head portion of the bolt 3 comprises an inner portion in which the inner end 21 of the mobile phase discharging tube 2 is fitted, a middle portion of a truncated conical shape in which the ferrule 4 on the tube 2 close to its inner end is fitted, and an internally threaded portion of an enlarged diameter which the threaded stem portion 61 of the set screw 6 engages.

As the set screw 6 is screwed into the internally threaded portion of the bolt 3, the screw compresses the ferrule 4, which in turn clamps the end portion 21 of the discharge tube 2 thereby to secure the tube 2 to the head portion of the connector 3.

The recess 32 in the stem portion of the bolt 3 comprises a conical portion in which the ferrule 5 is fitted and a cylindrical portion 32 in which the end portion 11 of the column pipe 1 is fitted.

The stem portion of the bolt 3 is externally threaded as at 37 so that the cap nut 7 may engage the bolt stem to clamp and compress the ferrule 5 thereby to securely fix the end portion 11 of the column pipe 1 to the connector 3.

In the connector 3 there is formed an additional recess 33 for communicating the recess 31 in which the end portion 21 of the mobile phase discharging tube 2 is fixed and the recess 32 in which the end portion 11 of the column pipe 1 is fixed. The recess 33 comprises a passage 34 of a small diameter

6

extending inwardly from the inner end of the recess 31, a space 35 of a larger diameter and a small axial length extending inwardly from the inner end of the recess 32, and a space 36 having the same diameter as the space 35 and a small axial length and communicating the space 35 and the passage 34, and consequently communicating the column pipe 1 and the mobile phase discharging tube 2. The filter 8 is set in the space 35, and in the space 36 there is provided a spacer 9 for providing a fluid converging flow path as will be described below in detail. The diameter of the passage 34 is substantially equal to the inside diameter of the mobile phase discharging tube 2. By way of example, the space 36 for the spacer 9 is shaped like a thin circular plate having a diameter $d$ of 4.2 mm and a thickness or axial length $e$ of 0.1 mm. The spaces 35 and 36 are so shaped as to receive therein the filter 8 and the spacer 9. In Fig. 1 the filter 8 and the spacer 9 are shown set in the spaces 35 and 36. In the recess 33 there is a sudden change in the cross sectional area of the flow path between the space 36 for the spacer 9 and the passage 34.

The passage 34 for discharging the mobile phase, the space 35 for containing the filter 8, the space 36 for containing the spacer 9 and the recess 32 for receiving the end portion 11 of the column pipe 1 are formed in the connector 3 in such a mutual relationship that the filter 8 in the space 35 and the spacer 9 in the space 36 are in axial alignment with the axially aligned axes of the column pipe 1 and the discharging tube 2.

The filter 8 set in the space 35 for supporting the downstream end of the stationary phase 10 comprises a porous member of a multilayer structure made of a plurality, say, ten (10) stainless steel nets of about 200 mesh heated and pressed together to have pores of about 2 μm in effective diameter. The filter 8 is a circular plate having a diameter of 4.2 mm and a thickness of 0.45 mm. The filter may also be made of a single layer of stainless steel network.

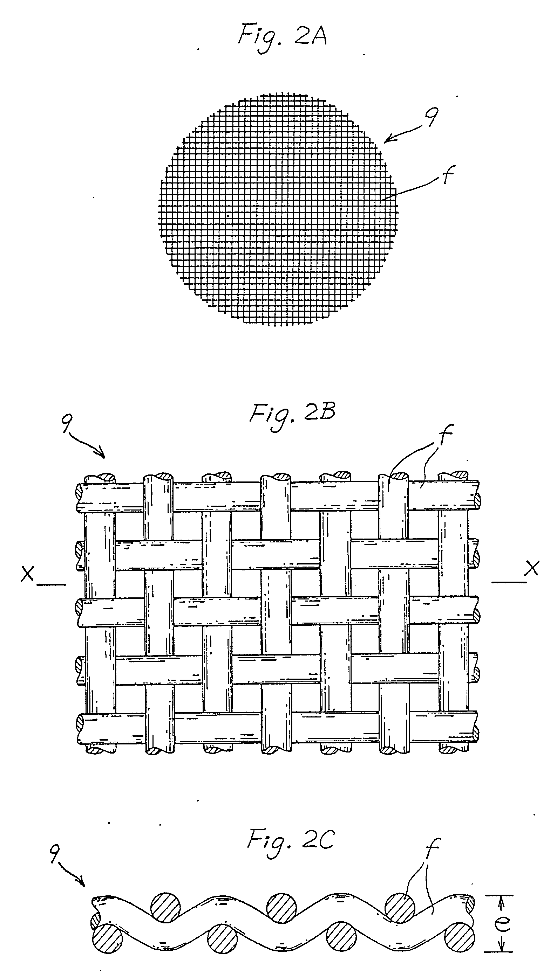

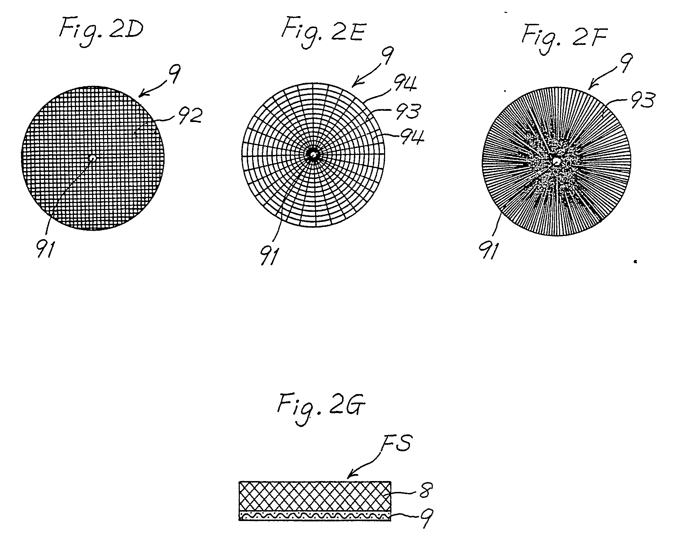

The spacer 9 fitted in the space 36 comprises a netlike member made of stainless steel fibers f of 60 μm in diameter woven into a meshed fabric of plain weave having about 150 mesh size, as shown in Fig. 2B and 2C. The spacer may be separable from within the space 36 or fixed by, for example, soldering to the bottom surface of the space 36, which may be considered as the inner surface of the axial end wall of the column. The spacer may be of a multilayer structure comprising a plurality of webs of meshed fabric of plain weave piled one upon another, which may be separable or formed into a single body. The spacer is, for example, 4.2 mm in diameter and 0.1 mm in thickness. The filter and the spacer may also be made of any other suitable material than stainless steel. The filter 8 and the spacer 9 may either be separate members or put together under high pressure to form a single body FS as shown in Fig. 2G. It should be noted that in this and other figures the relative dimensions of the component parts are not shown accurately but some of them are shown exaggerated for clarity of illustration.

The stationary phase packed in the column pipe under high pressure has an average particle size of 5 μm, so that the particles constituting the stationary phase in the column pipe can be supported at the downstream end thereof by the above-mentioned filter 8. The particles of the stationary phase are shown exaggerated in Fig. 1.

With the above arrangement, since the volume of the space 36 occupied by the spacer 9 is very small and the flow resistance value of the flow path provided by the spacer is negligibly small, the linear speed of the fluid in radial direction through the spacer is high, so that the fluid that has passed through the filter 8 can be collected into the discharging tube 2 substantially instantaneously.

At the upstream or inlet side of the column, an upstream or inlet filter similar to the above-mentioned downstream or outlet filter 8 is arranged in contact with the upstream end surface of the stationary phase, and also an upstream or inlet spacer similar to the above-mentioned downstream or outlet spacer 9 is provided on or arranged close to the upstream end surface of the inlet filter.

Figs. 2D, 2E and 2F show different embodiments of the spacer used in the chromatographic column of the invention. Fig. 2D shows a spacer 9 comprising a circular plate having a central through bore 91 and a plurality of grooves 92 formed on one end surface thereof in a grid-like pattern.

Fig. 2E shows a spacer 9 comprising a circular plate having a central through bore 91 and a plurality of radial grooves 93 and concentric grooves 94 formed on one end surface of the plate.

Fig. 2F shows a spacer 9 comprising a circular plate having a central through bore 91 and as many radial grooves 93 as possible formed on one end surface of the plate, with as small an angular space between adjacent grooves as possible.

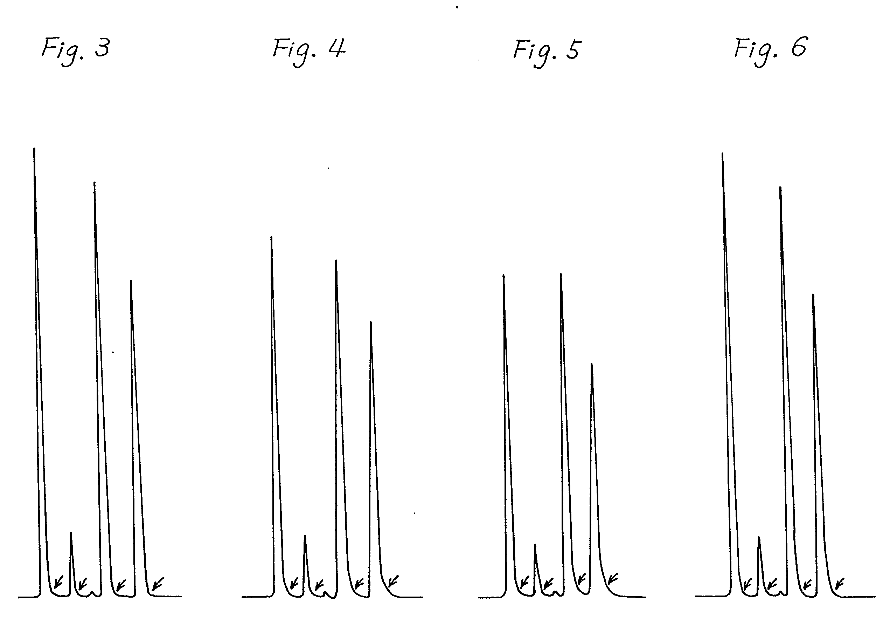

Figs. 3 through 6 show chromatograms obtained when the same sample of a methanol solution of uracil, benzene, naphthalene and biphenyl is analyzed with columns of different structures but under the same conditions, that is, with octa decyl silane as the stationary phase, a column pipe 5 cm in length and 4 mm in inside diameter, a water solution of 80 % methanol as the mobile phase, and a flow rate of 0.5 ml/min of the mobile phase.

The chromatogram of Fig. 3 was obtained with a column of the structure shown in Fig. 1, which will be

7

referred to as column No. 1. The chromatogram of Fig. 4 was obtained with a column (to be referred to as column No. 2) for high-speed liquid chromatography having the same structure as that of Fig. 1 without the spacer 9. The chromatogram of Fig. 5 was obtained with a column (to be referred to as column No. 3) for high-speed liquid chromatography having the same structure as column No. 2 except that the filters were of a conventional type made of sintered metal. Column No. 3 is of a conventional type. The chromatogram of Fig. 6 was obtained with a column (to be referred to as column No. 4) for high-speed liquid chromatography having the same structure as column No. 1 except that the filters were made of sintered metal.

Compared with the chromatograms of Figs. 4 and 5 obtained with the column without the spacer 9, those of Figs. 3 and 6 show sharper peaks with improved tailings as indicated by arrows. Comparison of Figs. 4 and 5 indicates that tailing is more suppressed with the filter of netlike structure than with the filter of sintered metal.

In the above analyses with columns No. 1, 2, 3 and 4, the following results were obtained with respect to biphenyl, one of the sample components.

|  | Component: | Biphenyl |
|---|---|---|
| Column No. | N | (P as) |
| 1 | 3200 | 1.16 |
| 2 | 2700 | 1.49 |
| 3 | 2500 | 1.81 |
| 4 | 2700 | 1.25 |

In the above table, N indicates the theoretical plate number of the column, and (P as) indicates the asymmetry of a peak. $\overline{N}$ is calculated for one peak by the following equation:

$$N = 2\pi\,(t_R h/A)^2$$

where $T_R$ is the retention time of a peak, $\underline{h}$ is the height of the peak, and $\underline{A}$ is the area of the peak. The higher the value of N is, the sharper the peak becomes.

The peak asymmetry (P as) indicates the ratio of the forward portion to the rear portion both of which are obtained by dividing the peak width measured at the one-tenth point of the peak height by a perpendicular line to the base line from the peak top. The nearer to one (1) the ratio is, the more symmetrical the peak becomes.

In the above table, the values if (P as) indicate that with column No. 1 and No. 4 in which the netlike spacer is used it is possible to obtain peaks sharper and more symmetrical than with the other columns. By combined use of the spacer and the filter of netlike structure it is possible to improve the theoretical plate number of the column and obtain peaks with increased symmetry and reduced tailing.

Thus, in accordance with the invention, it is possible to supply a sample to be analyzed substantially simultaneously to all over the inlet end surface of the stationary phase in a column, collect a separated sample component substantially simultaneously from all over the outlet end surface of the stationary phase without causing undue broadening of the band of the separated component, increase the theoretical plate number of the column, and reduce the phenomenon of tailing thereby to improve the accuracy of analysis. In addition, since deformation of the filter under high pressure can be prevented, the accuracy of analysis can be maintained.

A chromatographic column provided with a spacer in contact with the upstream end surface of an inlet filter holding the upstream end of the stationary phase filling the column pipe, and/or the downstream end surface of an outlet filter holding the downstream end of the stationary phase, the spacer providing a flow path having a flow resistance value sufficiently smaller than that of the filters, so that the flow path of the spacer can disperse a mobile phase supplied to the column substantially instantly all over the inlet filter surface, or collect the mobile phase substantially instantly from all over the outlet filter surface into a mobile phase discharging tube, thereby to prevent the sample flowing through the filters from being unduly broadened in the direction of flow, and to obtain a chromatogram with sharper and more symmetrical peaks than otherwise.

Claims

1. A column for use in a chromatograph, comprising:
a column pipe;
a stationary phase filling said column pipe;
means for introducing a mobile phase into said column pipe through one axial end thereof;
means for discharging said mobile phase out of said column pipe through the opposite axial end thereof;
a filter having an end surface in contact with either one of both axial end surfaces of said stationary phase in said column pipe; and
means for supporting said filter at substantially all of the other end surface thereof opposite to said end surface thereof in contact with said stationary phase without obstructing uniform supply of fluid to said filter or without obstructing uniform collection of fluid from said filter, and simultaneously providing a flow path capable of dispersing said mobile phase all over said other end surface of said filter or collecting said mobile phase effluent from all over said other end surface of said filter, said flow path having a flow resistance value sufficiently smaller than that of said filter and a volume so small that its influence on the chromatogram obtained is negligible.

2. The column of claim 1, wherein said filter supporting and flow path providing means comprises a member of a netlike structure.

3. The column of claim 2, wherein said member of a netlike structure is of a single layer or a multilayer structure comprising a single web or a plurality of webs of a meshed fabric of plain weave.

4. The column of claim 3, wherein said fabric is woven with metallic fibers.

5. The column of claim 3, wherein said fabric is woven with fibers of a plastic material.

6. The column of claim 1, wherein said filter supporting and flow path providing means comprises a thin plate having a plurality of grooves formed on that one end surface thereof which is in contact with said other end surface of said filter, and a central hole for communicating said grooves with either said mobile phase introducing means or said mobile phase discharging means.

7. The column of claim 6, wherein there are provided as many of said grooves as possible extending radially from said central hole.

8. The column of claim 7, wherein said plate is further provided on said one end surface with a plurality of concentric grooves communicating with said radially extending grooves.

9. The column of claim 6, wherein said grooves are arranged in a grid-like pattern.

10. The column of claim 1, wherein said filter supporting and flow path providing means is incorporated in that inner surface of said mobile phase introducing means or said mobile phase discharging means which faces said other end surface of said filter opposite to said end surface thereof in contact with said stationary phase.

11. The column of claim 2, wherein said filter is of a netlike structure.

12. The column of claim 11, wherein said netlike member constituting said filter supporting and flow path providing means is secured to said other end surface of said filter to form a single body.

13. The column of claim 11, wherein said filter is of a single layer or a multilayer structure comprising a single web or a plurality of webs of meshed fabric piled one upon another and compressed to form a single body of a smaller pore size than that of said member of a netlike structure constituting said filter supporting and flow path providing means and the grain size of said stationary phase.

14. A spacer for use in a chromatographic column comprising a column pipe, a stationary phase filling a substantial length of said column pipe, and a pair of filters of a netlike structure provided at the upstream and downstream ends of said solid phase in said column pipe; said spacer being of a single layer or a multilayer structure comprising a single web or a plurality of webs of meshed fabric woven in plain weave with fibers so as to have a pore size larger than that of said filters, and adapted to be placed at the upstream side of said upstream filter or at the downstream side of said downstream filter so as to provide a flow path capable of substantially instantaneously dispersing fluid all over the upstream surface of said upstream filter, or substantially instantaneously collecting the fluid effluent from all over the downstream surface of said downstream filter.

15. The spacer of claim 14, wherein said fibers are of a metal.

16. The spacer of claim 14, wherein said fibers are of a plastic material.

17. A filter for supporting a stationary phase in a chromatographic column, comprising a first portion and a second portion integral therewith, said first portion comprising a single web or a plurality of webs of meshed fabric piled one upon another and compressed to form a body of a pore size smaller than the grain size of said stationary phase; and said second portion comprising a single web or a plurality of webs of meshed fabric of plain weave having a pore size larger than that of said first portion.

9

18. The filter of claim 17, wherein said meshed fabric is woven with metallic fibers.

19. The filter of claim 17, wherein said meshed fabric is woven with fibers of a plastic material.

20. The filter of claim 17, wherein said meshed fabric of one of said first and second portions is woven with metallic fibers while said meshed fabric of the other of said first and second portions is woven with fibers of a plastic material.

Fig.1

Fig. 2A

Fig. 2B

Fig. 2C

*Fig. 2D*

*Fig. 2E*

*Fig. 2F*

*Fig. 2G*

Fig. 3    Fig. 4    Fig. 5    Fig. 6

EP 0 310 867 A2

Fig.7

Fig. 8A

Fig. 8B

Fig. 8C

Fig. 9

Fig.10

Fig. 11